# EUROPÄISCHE PATENTSCHRIFT

(11) **EP 1 238 752 B1**
(45) Veröffentlichungstag und Bekanntmachung des Hinweises auf die Patenterteilung: **01.06.2005**
(21) Anmeldenummer: 01105919.3
(22) Anmeldetag: 09.03.2001
(51) Int. Cl.: B23Q 1/62, B23Q 5/34

(54) **Werkzeugmaschine**
Machine tool
Machine outil

(43) Veröffentlichungstag der Anmeldung: 11.09.2002
(73) Patentinhaber: Cross Hüller GmbH, 71636 Ludwigsburg (DE)
(72) Erfinder: Stengele, Gerald, 71636 Ludwigsburg (DE); Geiger, Dietrich, 71723 Grossbottwa (DE)
(74) Vertreter: Rau, Manfred, Dr. Dipl.-Ing.

(56) Entgegenhaltungen:
- EP-A- 0 614 724
- EP-A- 0 742 072
- EP-A- 0 893 196
- DE-A- 3 037 648
- US-A- 5 789 892
- US-A- 6 012 884

## Beschreibung

Aus der EP 0 742 072 ist eine Werkzeugmaschine mit einem rahmenartigen Ständer bekannt, in dem ein x-Schlitten in horizontaler x-Richtung verschiebbar auf Führungen gelagert ist. In dem x-Schlitten ist wiederum ein vertikal verfahrbarer y-Schlitten auf Führungen gelagert. Zum Antrieb sind jeweils x-Linearmotore und y-Linearmotore vorgesehen, die seitlich einander gegenüberliegend derart angeordnet sind, daß die in y-Richtung wirkenden Kräfte der x-Linearmotoren und die in x-Richtung wirkenden Kräfte der y-Linearmotoren einander jeweils aufheben, so daß Kräftesymmetrie herrscht. Entsprechendes gilt für die Antriebe eines eine Werkzeugspindel tragenden z-Schittens, der auf dem y-Schlitten gelagert ist. Diese sogenannte Box-in-Box-Bauweise hat sich in beträchtlichem Maße durchgesetzt, und zwar wegen der kompakten und steifen RahmenBauweise und der Kräfte-Symmetrie. Nachteilig ist, daß die Bearbeitung der Schlitten und die Montage und gegebenenfalls Wartungsarbeiten wegen der schweren Zugänglichkeit der Führungen und der Linearmotoren aufwendig sind. Wegen der Kräfte-Symmetrie sind die Führungen im wesentlichen nicht vorgespannt, so daß Verschleiß der Führungen Führungsspiel zur Folge hat, und zwar mit negativen Folgen für die Bearbeitungsqualität.

Eine ähnliche Ausgestaltung ist aus der DE 43 07 482 A (entsprechend US 5,688,084 A) bekannt.

Aus der EP 0 876 240 B1 (entsprechend US 6,012,884 A) ist eine Werkzeugmaschine mit einem rahmenartigen Ständer bekannt, an dem ein horizontal in x-Richtung verfahrbarer x-Schlitten und auf diesem ein vertikal verfahrbarer y-Schlitten vorgesehen sind. Im y-Schlitten ist ein eine Werkzeugspindel tragender z-Schlitten angeordnet. Zum Antrieb des x-Schlittens ist ein im Bereich einer unteren x-Führung angeordneter x-Linearmotor vorgesehen. Zum Antrieb des y-Schlittens sind zwei einander symmetrisch gegenüberliegende, und mit Kräfteausgleich wirkende y-Linearmotor vorgesehen.

Der Erfindung liegt die Aufgabe zugrunde, eine Werkzeugmaschine mit einem x-Schlitten und einem auf diesem verschiebbar angeordneten y-Schlitten mit einer von letzterem getragenen Werkzeugspindel zu schaffen, deren Schlitten mit geringem Fertigungsaufwand herstellbar und anschließend einfach montierbar sind, und die selbst bei Verschleiß der Führungen frei von Führungsspiel sind.

Diese Aufgabe wird erfindungsgemäß durch die Merkmale des Anspruches 1 gelöst. Durch die erfindungsgemäße Ausgestaltung ist die Fertigung des Ständers und des x-Schlittens und des y-Schlittens jeweils im Bereich der Linearmotoren sehr einfach möglich, da nur offenliegende Frontseiten bearbeitet werden müssen. Auch die Montage ist sehr einfach, da die Montageflächen direkt zugänglich sind. Durch die spezifische Anordnung der Linearmotoren wird außerdem erreicht, daß die bei Linearmotoren quer zur Bewegungsrichtung wirkenden Anziehungskräfte nur in z-Richtung wirken und damit mögliches Führungsspiel in den Führungen kompensieren. Auch wenn Führungen aufgrund von Verschleiß Führungsspiel aufweisen, können die Führungen in der Regel weiter eingesetzt werden, wogegen sie bei der herkömmlichen Bauweise nach dem Stand der Technik ausgetauscht werden müssen.

Durch die Merkmale der Ansprüche 2 und 3 wird erreicht, daß auch die Montageflächen der Führungen in besonders einfacher Weise bearbeitet werden können und die Führungen selber mit geringem Aufwand montiert werden können. Außerdem wird bei dieser Ausgestaltung jede einzelne Führung symmetrisch belastet.

Die Ansprüche 4 bis 7 geben jeweils an, wie in besonders einfacher Weise die einzelnen Teile der Linearmotoren und der Führungen einander zugeordnet werden.

Die Ansprüche 8 und 9 geben eine Ausgestaltung wieder, die die Montagesowie die Bearbeitungsfreundlichkeit erhöht.

Die Ansprüche 10 und 11 geben optimale Anordnungen der Linearmotoren an.

Anspruch 12 gibt wieder, daß große Teile der Führungen und der Linearmotoren direkt von der Arbeitsseite her zugänglich sind, wozu es jeweils nur eines Verfahrens des x-Schlittens und/oder der y-Schlittens in eine äußeste Position bedarf.

Weitere Merkmale, Vorteile und Einzelheiten der Erfindung ergeben sich aus der nachfolgenden Beschreibung eines Ausführungsbeispiels anhand der Zeichnung. Es zeigen
- Fig. 1: eine Teil-Stirnansicht einer Werkzeugmaschine nach der Erfindung mit in z-Richtung unverschiebbarer Werkzeugspindel,
- Fig. 2: einen vertikalen Längsschnitt durch die Werkzeugmaschine nach Fig. 1 gemäß der Schnittlinie II-II in Fig. 1,
- Fig. 3: einen horizontalen Längsschnitt durch die Werkzeugmaschine nach Fig. 1 gemäß der Schnittlinie III-III in Fig. 1,

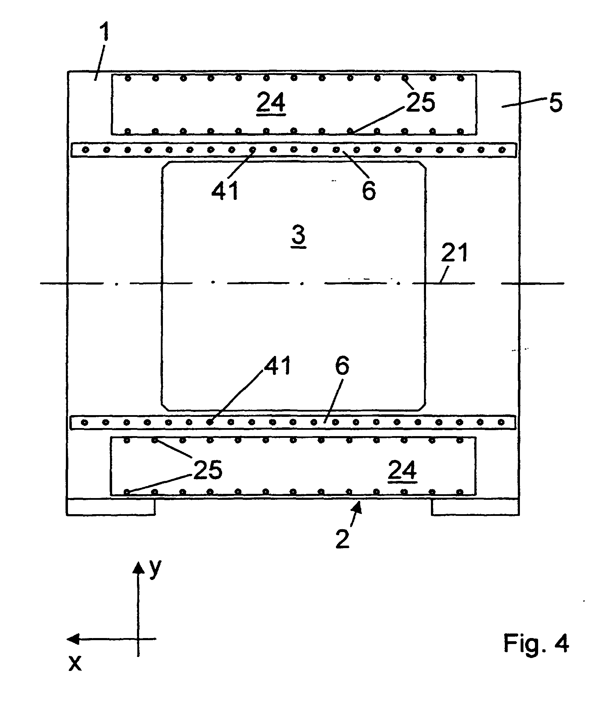

- Fig. 4: eine Stimansicht des Ständers der Werkzeugmaschine,

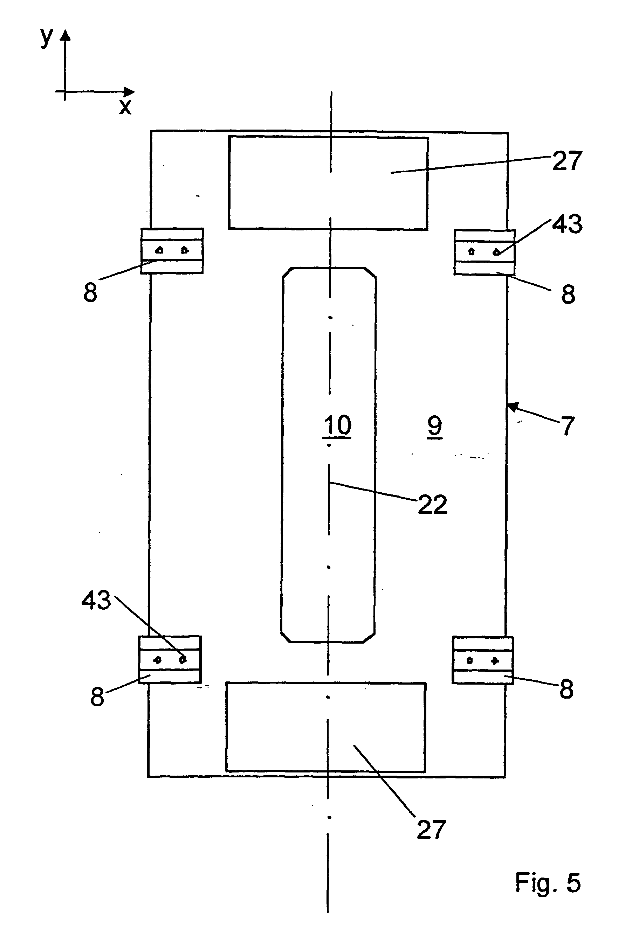

- Fig. 5: eine Draufsicht auf die Rückseite des x-Schlittens,
- Fig. 6: eine Draufsicht auf die Vorderseite des x-Schlittens,

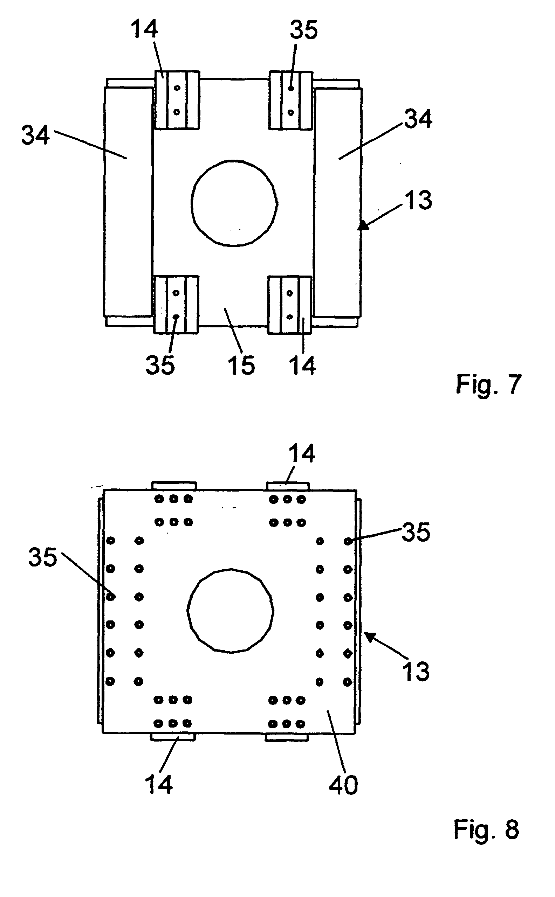

- Fig. 7: eine Draufsicht auf die Rückseite des y-Schlittens,
- Fig. 8: eine Draufsicht auf die Vorderseite des y-Schlittens,
- Fig. 9: eine Ansicht des y-Schlittens mit einem z-Schlitten,
- Fig. 10: die Anbringung der Linearmotoren und Führungen zwischen Ständer und Schlitten in vertikalem Längsschnitt in schematischer Darstellung, und
- Fig. 11: einen Teil-Horizontalschnitt durch den x-Schlitten.

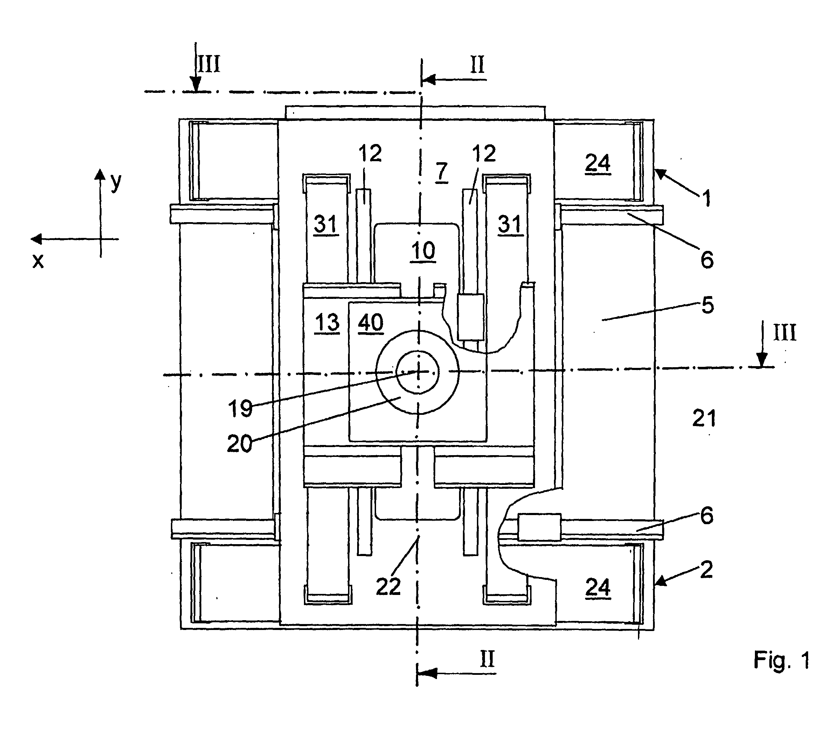

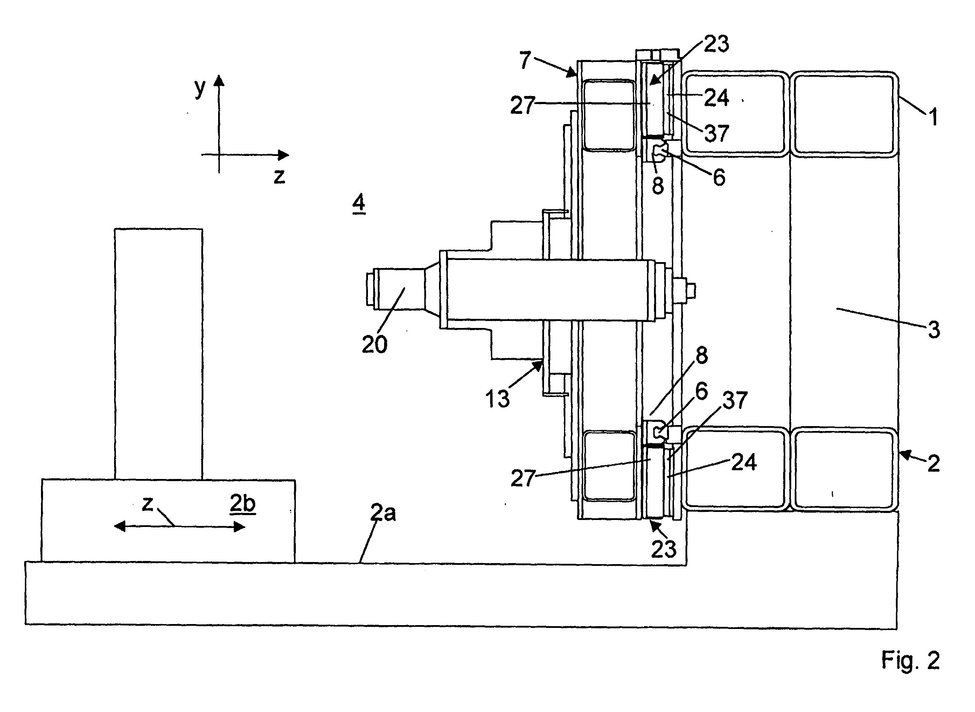

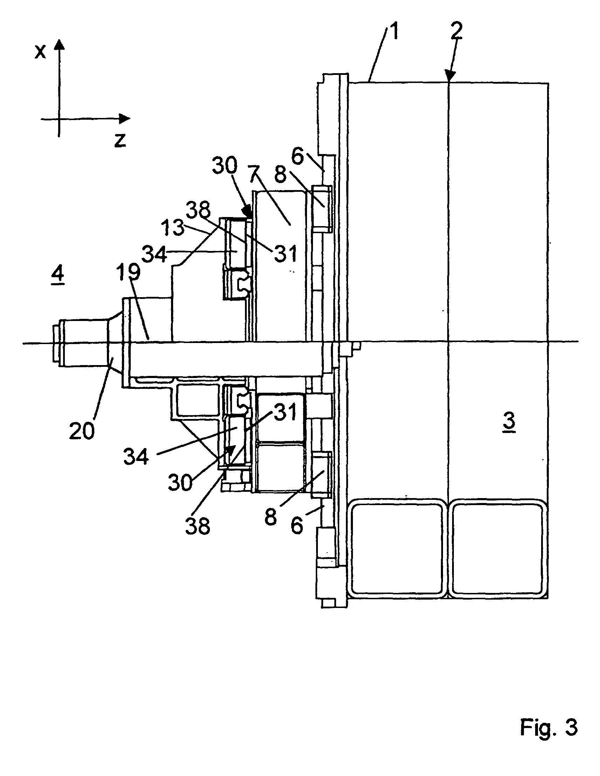

Wie insbesondere den Fig. 1 bis 3 entnehmbar ist, weist die in der Zeichnung dargestellte Werkzeugmaschine einen - in der horizontalen z-Richtung gesehen - etwa quadratischen durch einen Rahmen 1 gebildeten Ständer 2 auf. Der Ständer 2 ist auf einem Grundgestell 2a abgestützt. Der Rahmen 1 ist - wie Fig. 2 und 3 erkennen lassen - durch Hohlprofile gebildet und umschließt einen Innenraum 3, der beidseitig offen ist, und zwar insbesondere zur Arbeitsseite 4 hin. Auf der Arbeitsseite 4 ist auf dem Grundgestell 2a ein Werkstückträger 2b abgestützt, der in z-Richtung in üblicher Weise verschiebbar sein kann.

An der der Arbeitsseite 4 zugewandten Stirnseite 5 des Ständers 2 ist beiderseits des Innenraums 3 in einer vertikalen x-y-Ebene und sich in x-Richtung erstreckend jeweils eine parallel zueinander angeordnete x-Führungsschiene 6 angebracht. Auf diesen x-Führungsschienen 6 ist ein horizontal in x-Richtung verschiebbarer x-Schlitten 7 mit Führungsschuhen 8 gelagert. Die Führungsschuhe 8 sind an der der Stirnseite 5 des Ständers 2 zugewandten Rückseite 9 des x-Schlittens 7 angebracht. Der x-Schlitten 7 ist ebenfalls rahmenartig ausgebildet und weist eine sich im wesentlichen vertikal in y-Richtung erstreckende in z-Richtung offene Durchgangsöffnung 10 auf. An seiner der Arbeitsseite 4 zugewandten Vorderseite 11 sind beiderseits der Durchgangsöffnung 10 zueinander parallele, sich in y-Richtung erstreckende y-Führungsschienen 12 angebracht, auf denen ein y-Schlitten 13 mittels Führungsschuhen 14 vertikal, also in y-Richtung verschiebbar gelagert ist. Die Führungsschuhe 14 sind an der der Vorderseite 11 des x-Schlittens 7 zugewandten Rückseite 15 des y-Schlittens 13 angebracht.

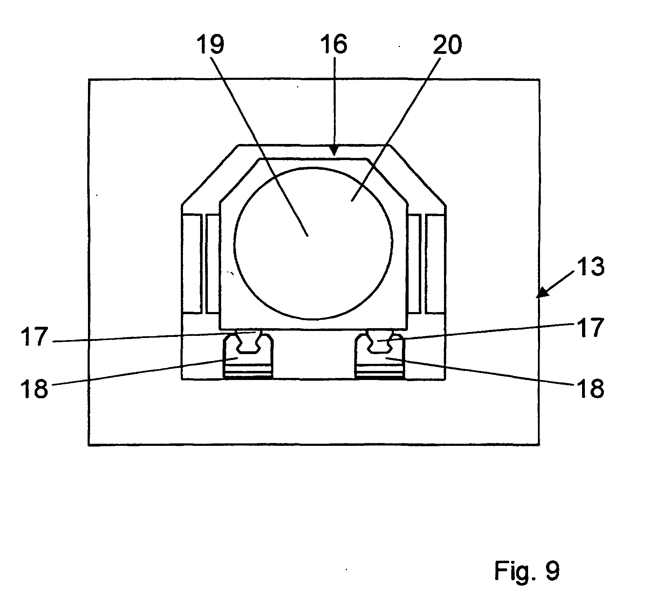

Bei der Ausgestaltung nach Fig. 9 ist im rahmenartigen und in z-Richtung durchgehend offenen y-Schlitten 13 ein z-Schlitten 16 auf einem Paar parallel zueinander angeordneter, sich in z-Richtung erstreckender z-Führungsschienen 17 in z-Richtung verschiebbar gelagert, und zwar mittels am y-Schlitten 13 angebrachter Führungsschuhe 18. Der z-Schlitten 16 trägt eine um eine in z-Richtung verlaufende Achse 19 drehantreibbare Werkzeugspindel 20. Dagegen ist bei der Ausgestaltung nach den Fig. 1 bis 3 die Werkzeugspindel 20 unverschiebbar ausgebildet. Bei einer solchen Ausgestaltung ist dann in üblicher Weise die Werkstückaufnahme 2b in z-Richtung zur Werkzeugspindel 20 zustellbar ausgebildet.

Die x-Führungsschienen 6 mit Führungsschuhen 8 bilden x-Führungen, die spiegelsymmetrisch zur x-z-Mittelebene 21 des Ständers 2 angeordnet sind. Die y-Führungsschienen 12 mit Führungsschuhen 14 bilden y-Führungen, die spiegelsymmetrisch zur y-z-Mittelebene 22 des x-Schlittens 7 angeordnet sind.

Zwischen der Stirnseite 5 des Ständers 2 und der Rückseite 9 des x-Schlittens sind x-Linearmotoren 23 vorgesehen. Sie sind ebenfalls spiegelsymmetrisch zur x-z-Mittelebene in der x-y-Ebene angeordnet. Sie weisen Permanentmagnet-Anordnungen 24 als Sekundär-Teil auf, die sich über den vollen Arbeitsweg des x-Schlittens 7 erstrecken. Jeweils eine Permanentmagnet-Anordnung 24 ist auf der dem Innenraum 3 abgewandten Seite der benachbarten Führungsschiene 6 an der Stirnseite 5 des Ständers 2 befestigt. Die Befestigung erfolgt mittels Schrauben 25, die in Gewindebohrungen 26 im Ständer 2 geschraubt werden, die zur Stirnseite 5 hin offen sind. Die Schrauben 25 werden von der zur Arbeitsseite 4 hin offenen Seite durch die Permanentmagnet-Anordnung 24 in die Gewindebohrungen 26 geschraubt. Alle Schrauben 25 verlaufen in z-Richtung.

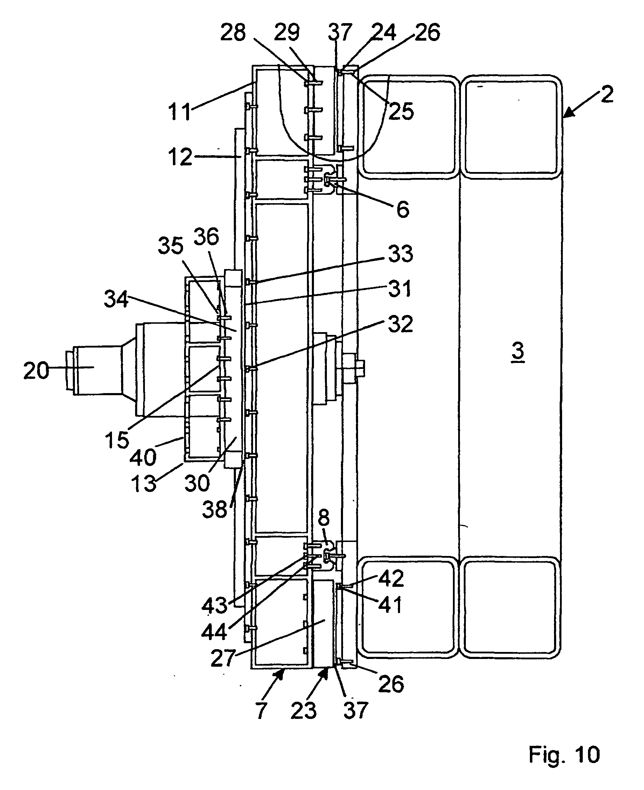

Jeder Permanentmagnet-Anordnung 24 ist eine Statorspule 27 als Primär-Teil zugeordnet, die an der Rückseite 9 des x-Schlittens 8 angebracht sind und dort mittels Schrauben 28 befestigt sind, die in Gewindebohrungen 29 in den Statorspulen 27 geschraubt sind. Auch die Schrauben 28 verlaufen in z-Richtung. Sie werden von der Vorderseite 11 des x-Schlittens 7 her in die Gewindebohrungen 29 der Statorspulen 27 geschraubt, wie Fig. 10 entnehmbar ist. Durch die in den x-Linearmotoren 23 auch in z-Richtung wirkenden Anziehungskräfte werden die Führungsschuhe 8 gegen die jeweilige Führungsschiene 6 gepreßt, so daß Führungsspiel in den x-Führungen beseitigt wird.

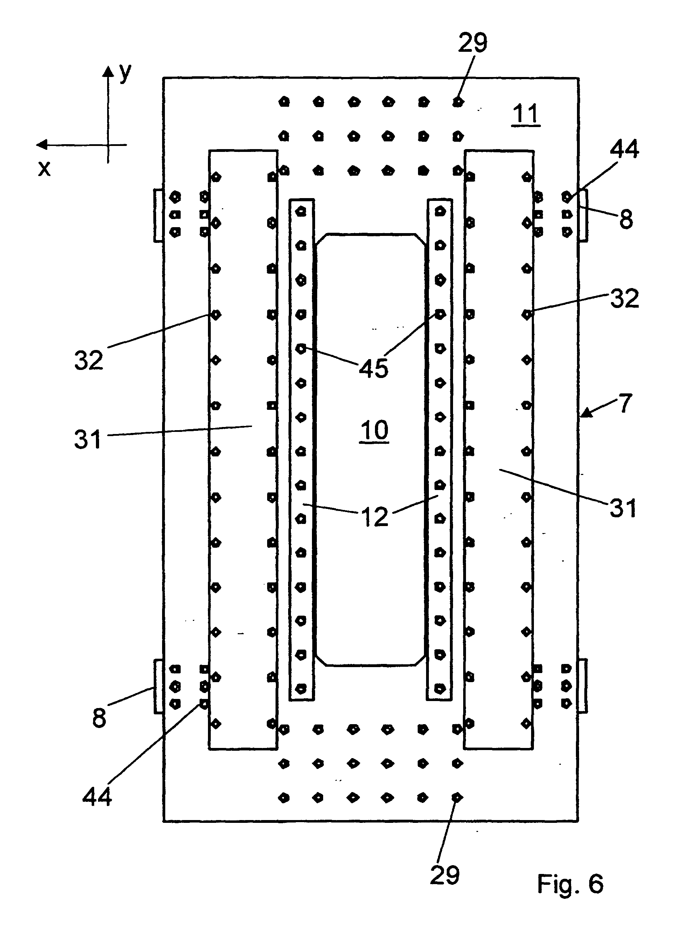

Zwischen der Vorderseite 11 des x-Schlittens 7 und der Rückseite 15 des y-Schlittens 13 sind y-Linearmotoren 30 angeordnet. Diese weisen Permanentmagnet-Anordnungen 31 als Sekundär-Teil auf, die jeweils beiderseits der Führungsschienen 12 an der Vorderseite 11 des x-Schlittens 7 angebracht sind und die sich über den vollen Verschiebeweg des y-Schlittens 13 erstrecken. Sie sind jeweils benachbart zur Führungsschiene 12 und zwar auf der der Durchgangsöffnung 10 abgewandten Seite angeordnet. Sie sind ebenfalls mittels Schrauben 32 am x-Schlitten 7 befestigt, die durch die Permanentmagnet-Anordnung 31 hindurch in zur Vorderseite 11 hin offene Gewindebohrungen 33 im x-Schlitten 7 geschraubt sind, wie Fig. 6 und 10 entnehmbar ist. Jeder Permanentmagnet-Anordnung 31 ist eine Statorspule 34 als Primär-Teil zugeordnet, die an der Rückseite 15 des y-Schlittens 13 mittels Schrauben 35 befestigt ist. Die Schrauben 35 sind von der Vorderseite 40 des y-Schlittens 13 her in Gewindebohrungen 36 der Statorspule 34 geschraubt. Auch in diesem Fall bewirken die in den y-Linearmotoren 30 in z-Richtung wirkenden Kräfte, daß die Führungsschuhe 14 des y-Schlittens 13 gegen die Führungsschienen 12 am x-Schlitten gepreßt werden, daß also durch die y-Linearmotoren 30 mögliches Führungsspiel in den y-Führungen beseitigt wird.

Wie sich aus der vorstehenden Erläuterung ergibt, befinden sich die Luftspalte 37 der x-Linearmotoren 23 zwischen deren Permanentmagnet-Anordnungen 24 und den Statorspulen 27 im wesentlichen in einer gemeinsamen x-y-Ebene. Gleichermaßen befinden sich die Luftspalte 38 der y-Linearmotoren 30, also die Luftspalte 38 zwischen den Permanentmagnet-Anordnungen 31 und den Statorspulen 34 in einer x-y-Ebene, die gegenüber der x-y-Ebene der Luftspalte 37 in z-Richtung versetzt ist.

Auch im y-Schlitten 13 in der verschiebbaren Ausgestaltung nach Fig. 9 sind z-Linearmotoren 39 für den Antrieb des z-Schlittens 16 in z-Richtung vorgesehen.

Die vorstehend geschilderten Linearmotoren sind Synchron-Linearmotoren. In gleicher Weise können aber Asynchron-Linearmotoren eingesetzt werden, deren Primär-Teil als Statorspule ausgebildet ist, währen der Sekundär-Teil aus Blechpaketen mit Kurzschluß-Spulen besteht.

Für die Befestigung der Führungsschienen 6 und 12 und die Führungsschuhe 8 und 14 gilt das gleiche wie für die Befestigung der Linearmotoren 23 und 30. Die x-Führungsschienen 6 sind mittels Schrauben 41 in Gewindebohrungen 42 in der Stirnseite 5 des Ständers 2 befestigt. Das Anschrauben erfolgt in der gleichen Richtung und in der gleichen Weise wie bei der Permamentmagnet-Anordnung 24. Die Führungsschuhe 8 werden mittels Schrauben 43 in Gewindebohrungen 44 im x-Schlitten 7 befestigt, wobei das Anschrauben in der gleichen Weise erfolgt wie bei den Statorspulen 27. Die y-Führungsschienen 12 werden mittels Schrauben 45 in nicht dargestellte Gewindebohrungen in der Vorderseite 11 des x-Schlittens 7 geschraubt, wobei das Anschrauben in der gleichen Weise wie bei den Permanentmagnet-Anordnungen 31 erfolgt. Die Führungsschuhe 14 werden schließlich mittels Schrauben 46 in nicht dargestellten Gewindebohrungen in der Rückseite 15 des y-Schlittens 13 befestigt, wobei das Anschrauben in gleicher Weise wie bei den Statorspulen 34 vonstatten geht.

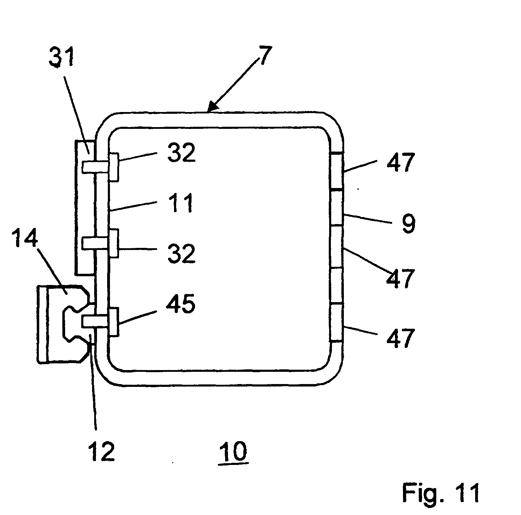

Wie sich aus Fig. 10 ergibt, können die Schrauben auch von der Innenseite eines Schlittens in das zu haltende Teil geschraubt sein. In Fig. 11 ist dargestellt, daß die Permanentmagnet-Anordnung 31 des y-Linearmotors 30 auch mittels Schrauben 32 am x-Schlitten 7 in der Weise befestigt werden kann, daß die Schrauben 32 vom Inneren des als Hohlkasten ausgebildeten x-Schlittens 7 durch die Vorderseite 11 des x-Schlittens 7 hindurch in die Permanentmagnet-Anordnung 31 geschraubt werden können. Dies ist möglich, weil mit den Schrauben 32 fluchtende Öffnungen 47 in der Rückseite 9 des x-Schlittens 7 ausgebildet sind, durch die die Schrauben 32 eingeführt und durch die ein Werkzeug zum Anziehen oder Lösen der Schrauben 32 hindurchgesteckt werden kann. In gleicher Weise können die y-Führungsschienen 12 an der Vorderseite 11 des x-Schlittens 7 mittels Schrauben 45 befestigt werden. Diese Befestigungsart gilt in gleicher Weise für die in Fig. 10 dargestellte Befestigung der Statorspulen 27 und der Führungsschuhe 8 an der Rückseite 9 des x-Schlittens 7.

Wie sich aus dem Vorstehenden ergibt, bilden die Stirnseite 5, die Rückseite 9 und die Vorderseite 11 des x-Schlittens 7 und die Rückseite 15 des y-Schlittens 13 einfach zu bearbeitende und leicht zugängliche Montageflächen für die x- und y-Führungen und die x- und y-Linearmotoren 23, 30.

Wie sich weiterhin aus dem Vorstehenden ergibt, bestehen die Linearmotoren 23, 30 jeweils aus einem ersten Motorelement und einem zweiten Motorelement. In vergleichbarer Weise bestehen die x-Führungen und y-Führungen aus einem ersten Führungselement und einem zweiten Führungselement. Alle Elemente sind jeweils paarweise einander zugeordnet und einander gegenüberliegend angebracht.

## Patentansprüche

1. Werkzeugmaschine
- mit einem einen Innenraum (3) begrenzenden rahmenartigen Ständer (2),
-- der eine in einer x-y-Ebene liegende Stirnseite (5) aufweist,
- mit einem x-Schlitten (7), der
-- eine der Stirnseite (5) zugewandte Rückseite (9) und
-- eine der Rückseite (9) abgewandte, einer Arbeitsseite (4) zugeordnete Vorderseite (11) aufweist,
- mit x-Führungen (6, 8), die
-- einerseits am Ständer (2) und
-- andererseits am x-Schlitten (7) angebracht sind und
-- eine Verschiebung des x-Schlittens (7) gegenüber dem Ständer (2) in x-Richtung erlauben,
- mit y-Führungen (12, 14), die
-- einerseits am x-Schlitten (7) und
-- andererseits am y-Schlitten (13) angebracht sind und
-- eine Verschiebung des y-Schlittens (13) gegenüber dem x-Schlitten (7) in y-Richtung erlauben,
- mit einer im y-Schlitten (13) angeordneten, in z-Richtung (3) verlaufenden Werkzeugspindel (20),
- mit x-Linearmotoren (23), die
-- einerseits an der Stirnseite (5) des Ständers (2) und andererseits an der Rückseite (9) des x-Schlittens (7) angeordnet sind,
-- jeweils aus Primär-Teil (27) und Sekundär-Teil (24) bestehen und
-- jeweils zwischen Primär-Teil (27) und Sekundär-Teil (24) einen Luftspalt (37) aufweisen,
--- wobei die Luftspalte (37) der x-Linearmotoren (23) in einer gemeinsamen x-y-Ebene liegen und
- mit y-Linearmotoren (30), die
-- einerseits an der Vorderseite (11) des x-Schlittens (7) und andererseits an der Rückseite (15) des y-Schlittens (13) angeordnet sind,
-- die jeweils aus Primär-Teil (34) und Sekundär-Teil (31) bestehen und
-- die jeweils zwischen Primär-Teil (34) und Sekundär-Teil (31) einen Luftspalt (38) aufweisen,
--- wobei die Luftspalte (38) der y-Linearmotoren (30) in einer gemeinsamen x-y-Ebene liegen.

2. Werkzeugmaschine nach Anspruch 1, **dadurch gekennzeichnet,**
**daß** die x-Führungen (6, 8) einerseits an der Stirnseite (5) des Ständers (2) und andererseits an der Rückseite (9) des x-Schlittens (7) angebracht sind.

3. Werkzeugmaschine nach Anspruch 1, **dadurch gekennzeichnet,**
**daß** die y-Führungen (12, 14) einerseits an der Vorderseite (11) des x-Schlittens (7) und andererseits an der Rückseite (15) des y-Schlittens (13) angebracht sind.

4. Werkzeugmaschine nach Anspruch 1, **dadurch gekennzeichnet,**
**daß** ein erstes Teil (24) jedes x-Linearmotors (23) an der Stirnseite (5) des Ständers (2) und ein zweites Teil (27) an der Rückseite (9) des x-Schlittens (7) angebracht sind.

5. Werkzeugmaschine nach Anspruch 1, **dadurch gekennzeichnet,**
**daß** ein erstes Teil (31) jedes y-Linearmotors (30) an der Vorderseite (11) des x-Schlittens (7) und ein zweites Teil (34) an der Rückseite (15) des y-Schlittens (13) angebracht sind.

6. Werkzeugmaschine nach Anspruch 2, **dadurch gekennzeichnet**
**daß** die x-Führungen (6, 8) mittels in z-Richtung verlaufender Schrauben (41, 43) am Ständer (2) bzw. am x-Schlitten (7) befestigt sind.

7. Werkzeugmaschine nach Anspruch 3, **dadurch gekennzeichnet,**
**daß** die y-Führungen (12, 14) mittels in z-Richtung verlaufender Schrauben (45, 47) am x-Schlitten (7) bzw. am y-Schlitten (13) befestigt sind.

8. Werkzeugmaschine nach Anspruch 4, **dadurch gekennzeichnet,**
**daß** die x-Linearmotoren (23) mittels in z-Richtung verlaufender Schrauben (25, 28) am Ständer (2) bzw. am x-Schlitten (7) befestigt sind.

9. Werkzeugmaschine nach Anspruch 5, **dadurch gekennzeichnet,**
**daß** die y-Linearmotoren (30) mittels in z-Richtung verlaufender Schrauben (32, 35) am x-Schlitten (7) bzw. am y-Schlitten (13) befestigt sind.

10. Werkzeugmaschine nach Anspruch 1, **dadurch gekennzeichnet,**
**daß** die x-Linearmotoren (23) spiegelsymmetrisch zu einer x-z-Mittelebene (21) des Ständers (2) angeordnet sind.

11. Werkzeugmaschine nach Anspruch 1, **dadurch gekennzeichnet,**
**daß** die y-Linearmotoren (30) spiegelsymmetrisch zu einer y-z-Mittelebene (22) des x-Schlittens (7) angeordnet sind.

12. Werkzeugmaschine nach Anspruch 1, **dadurch gekennzeichnet,**
**daß** die Führungen (6, 8; 12, 14) und die Linearmotoren (23, 30) zur Arbeitsseite (4) hin zumindest teilweise offenliegen.

## Claims

1. A machine tool comprising:
- a frame-like rack (2) defining an inner space (3), and
-- comprising a front side (5) positioned in an x-y plane;
- an x skid (7) having
-- a rear side (9) facing the front side (5), and
-- a face side (11) turned away from the rear side (9) and assigned to an operating side (4);
- x guides (6, 8) mounted
-- on the rack (2) on the one hand, and
-- on the x skid (7) on the other, and
-- allowing a displacement of the x skid (7) relative to the rack (2) in x direction;
- y guides (12, 14) mounted
-- on the x skid (7) on the one hand, and
-- on the y skid (13) on the other, and
-- allowing a displacement of the y skid (13) relative to the x skid (7) in y direction;
- a tool spindle (20) arranged in the y skid (13) and extending in z direction (3);
- x linear motors (23)
-- arranged on the front side (5) of the rack (2) on the one hand and on the rear side (9) of the x skid (7) on the other,
-- each comprising a primary part (27) and a secondary part (24), and
-- each comprising an air gap (37) between the primary part (27) and the secondary part (24),
--- wherein the air gaps (37) of the x linear motors are arranged in a common x-y plane; and
- y linear motors (30)
-- arranged on the face side (11) of the x skid (7) on the one hand and on the rear side (15) of the y skid (13) on the other,
-- each comprising a primary part (34) and a secondary part (31), and
-- each comprising an air gap (38) between the primary part (34) and the secondary part (31),
--- wherein the air gaps (38) of the y linear motors (30) are arranged in a common x-y plane.

2. A machine tool according to claim 1, **characterised in that** the x guides (6, 8) are attached to the front side (5) of the rack (2) on the one hand and to the rear side (9) of the x skid (7) on the other.

3. A machine tool according to claim 1, **characterised in that** the y guides (12, 14) are attached to the face side (11) of the x skid (7) on the one hand and to the rear side (15) of the y skid (13) on the other.

4. A machine tool according to claim 1, **characterised in that** a first part (24) of each x linear motor (23) is arranged on the front side (5) of the rack (2) and a second part (27) is arranged on the rear side (9) of the x skid (7).

5. A machine tool according to claim 1, **characterised in that** a first part (31) of each y linear motor (30) is arranged on the face side (11) of the x skid (7) and a second part (34) is arranged on the rear side (15) of the y skid (13).

6. A machine tool according to claim 2, **characterised in that** the x guides (6, 8) are mounted on the rack (2) and the x skid (7), respectively, by screws (41, 43) that extend in z direction.

7. A machine tool according to claim 3, **characterised in that** the y guides (12, 14) are mounted on the x skid (7) and the y skid (13), respectively, by screws (45, 47) that extend in z direction.

8. A machine tool according to claim 4, **characterised in that** the x linear motors (23) are mounted on the rack (2) and the x skid (7), respectively, by screws (25, 28) that extend in z direction.

9. A machine tool according to claim 5, **characterised in that** the y linear motors (30) are mounted on the x skid (7) and the y skid (13), respectively, by screws (32, 35) that extend in z direction.

10. A machine tool according to claim 1, **characterised in that** the x linear motors (23) are arranged mirror-symmetrically relative to a central x-z plane (21) of the rack (2).

11. A machine tool according to claim 1, **characterised in that** the y linear motors (30) are arranged mirror-symmetrically relative to a central y-z plane (22) of the x skid (7).

12. A machine tool according to claim 1, **characterised in that** the guides (6, 8; 12, 14) and the linear motors (23, 30) are at least in part openly exposed towards the operating side (4).

## Revendications

1. Machine-outil
- avec un montant (2) en forme de cadre délimitant un volume intérieur (3)
- qui comprend un côté frontal (5) se trouvant sur un plan x-y,
- avec un chariot x (7) qui comprend
- un côté arrière (9) dirigé vers le côté frontal (5) et
- un côté avant (11) opposé au côté arrière (9) et attribué à un côté de travail (4),
- avec des guides x (6, 8) qui sont placés
- d'une part sur le montant (2) et
- d'autre part sur le chariot x (7) et qui permettent
- un déplacement du chariot x (7) par rapport au montant (2) en direction x,
- avec des guides y (12, 14) qui sont placés
- d'une part sur le chariot x (7) et
- d'autre part sur le chariot y (13) et qui permettent
- un déplacement du chariot y (13) par rapport au chariot x (7) en direction y,
- avec une broche d'outillages (20) disposée dans le chariot y (13) et s'étendant en direction z (3),
- avec des moteurs linéaires x (23)
- qui sont disposés d'une part sur le côté frontal (5) du montant (2) et d'autre part sur le côté arrière (9) du chariot x (7),
- qui se composent respectivement de la partie primaire (27) et de la partie secondaire (24) et
- qui présentent respectivement un entrefer (37) entre la partie primaire (27) et de la partie secondaire (24),
- alors que les entrefers (37) des moteurs linéaires x (23) se trouvent sur un plan x-y commun et
- avec des moteurs linéaires y (30)
- qui sont disposés d'une part sur le côté avant (11) du chariot x (7) et d'autre part sur le côté arrière (15) du chariot y (13),
- qui se composent respectivement de la partie primaire (34) et de la partie secondaire (31) et
- qui présentent respectivement un entrefer (38) entre la partie primaire (34) et de la partie secondaire (31),
- alors que les entrefers (38) des moteurs linéaires y (30) se trouvent sur un plan x-y commun.

2. Machine-outil selon la revendication 1, **caractérisée en ce que** les guides x (6, 8) sont placés d'une part sur le côté frontal (5) du montant (2) et d'autre part sur le côté arrière (9) du chariot x (7).

3. Machine-outil selon la revendication 1, **caractérisée en ce que** les guides y (12, 14) sont placés d'une part sur le côté avant (11) du chariot x (7) et d'autre part sur le côté arrière (15) du chariot y (13).

4. Machine-outil selon la revendication 1, **caractérisée en ce qu'**une première partie (24) de chaque moteur linéaire x (23) est fixée sur le côté frontal (5) du montant (2) et qu'une deuxième partie (27) est fixée sur le côté arrière (9) du chariot x (7).

5. Machine-outil selon la revendication 1, **caractérisée en ce qu'**une première partie (31) de chaque moteur linéaire y (30) est fixée sur le côté avant (11) du chariot x (7) et qu'une deuxième partie (34) est fixée sur le côté arrière (15) du chariot y (13).

6. Machine-outil selon la revendication 2, **caractérisée en ce que** les guides x (6, 8) sont fixés sur le montant (2) ou sur le chariot x (7) à l'aide de vis (41, 43) s'étendant en direction z.

7. Machine-outil selon la revendication 3, **caractérisée en ce que** les guides y (12, 14) sont fixés sur le chariot x (7) ou sur le chariot y (13) à l'aide de vis (45, 47) s'étendant en direction z.

8. Machine-outil selon la revendication 4, **caractérisée en ce que** les moteurs linéaires x (23) sont fixés sur le montant (2) ou sur le chariot x (7) à l'aide de vis (25, 28) s'étendant en direction z.

9. Machine-outil selon la revendication 5, **caractérisée en ce que** les moteurs linéaires y (30) sont fixés sur le chariot x (7) ou sur le chariot y (13) à l'aide de vis (32, 35) s'étendant en direction z.

10. Machine-outil selon la revendication 1, **caractérisée en ce que** les moteurs linéaires x (23) sont disposés en symétrie par réflexion par rapport à un plan médian x-z (21) du montant (2).

11. Machine-outil selon la revendication 1, **caractérisée en ce que** les moteurs linéaires y (30) sont disposés en symétrie par réflexion par rapport à un plan médian y-z (22) du chariot x (7).

12. Machine-outil selon la revendication 1, **caractérisée en ce que** les guides (6, 8 ; 12, 14) et les moteurs linéaires (23, 30) sont au moins partiellement ouverts vers le côté de travail (4).
